# EUROPEAN PATENT APPLICATION

(11) **EP 4 741 694 A1**
(43) Date of publication of application: **13.05.2026**
(21) Application number: 24844825.0
(22) Date of filing: 25.07.2024
(51) Int. Cl.: F16K 31/06

(54) **ELECTROMAGNETIC COIL AND ELECTROMAGNETIC VALVE HAVING SAME**

(30) Priority: 25.07.2023 CN 202321975262 U
(71) Applicant: Zhejiang Dunan Artificial Environment Co., Ltd., Shaoxing Zhejiang 311835 (CN)
(72) Inventor: XIAO, Changjun, Shaoxing, Zhejiang 311835 (CN); CAI, Bin, Shaoxing, Zhejiang 311835 (CN)
(74) Representative: Zacco GmbH
(86) International application number: PCT/CN2024/107494
(87) International publication number: WO 2025/021139

(57) **Abstract**

The present disclosure provides an electromagnetic coil and an electromagnetic valve with the electromagnetic coil. The electromagnetic coil includes: a body, a central portion of the body being provided with a first mounting hole extending therethrough; a limiting member located on a side of the body and arranged corresponding to the first mounting hole, wherein the limiting member is capable of being cooperatively connected to a valve body of an electromagnetic valve to fix the valve body within the first mounting hole; and a covering layer surrounding outer peripheries of the body and the limiting member so as to fix the body and the limiting member. By means of a technical solution provided by a present disclosure, a problem in a prior art that a fixing member is prone to loosening can be solved.

## Description

This present disclosure claims the priority of Chinese Patent Application No. 202321975262.0, filed with the China National Intellectual Property Administration on July 25, 2023, and titled "Electromagnetic Coil and Electromagnetic Valve with Electromagnetic Coil".

### Technical Field

The present disclosure relates to the technical field of electromagnetic valves, and in particular, to an electromagnetic coil and an electromagnetic valve with electromagnetic coil.

### Background

Currently, in refrigeration equipment applications, electromagnetic valves are commonly used to control fluid flow channels. An electromagnetic valve includes an electromagnetic coil and a valve body, and the electromagnetic coil actuates the valve body to open and close.

In a prior art, an electromagnetic coil includes a body, a covering layer, and a fixing member. The covering layer surrounds an exterior of the body, the electromagnetic coil is sleeved on a sleeve of the valve body, and the fixing member is located outside the covering layer and connected to the sleeve to restrict relative movement between the electromagnetic coil and the sleeve. However, the fixing member is prone to loosening during use, which may cause the electromagnetic coil to shift relative to the sleeve during operation, resulting in noise or even control failure of the electromagnetic valve. At the same time, loosening of the fixing member may lead to water ingress at a connection between the fixing member and the covering layer, and causing a short circuit or burnout of the electromagnetic coil.

### Summary

The present disclosure provides an electromagnetic coil and an electromagnetic valve with electromagnetic coil, so as to solve a problem that the fixing member is prone to loosening in the prior art.

According to one aspect of the present disclosure, an electromagnetic coil is provided, including: a body, a central portion of the body being provided with a first mounting hole extending therethrough; a limiting member located on a side of the body and arranged corresponding to the first mounting hole, where the limiting member is capable of being cooperatively connected to a valve body of an electromagnetic valve to fix the valve body within the first mounting hole; and a covering layer surrounding outer peripheries of the body and the limiting member, so as to fix the body and the limiting member.

By means of a technical solution provided by the present disclosure, the body is sleeved onto the valve body through the first mounting hole, and a position of the body is restricted by the limiting member, so that displacement of the body is prevented; moreover, by providing the covering layer surrounding outer peripheries of the body and the limiting member, relative positions of the limiting member, a base, and the body can be further restricted, thereby preventing loosening of the limiting member during use and ensuring overall structural stability of the electromagnetic coil. Meanwhile, the covering layer can further provide a sealing effect for the electromagnetic coil, so as to prevent water from entering the body and causing burnout of the electromagnetic coil, thereby improving a safety performance of the electromagnetic coil during use.

Further, the limiting member has an abutting end and a free end arranged opposite to each other. The abutting end has an accommodating cavity, the accommodating cavity is in communication with the first mounting hole, the abutting end abuts against the body, the free end abuts against an inner wall of the covering layer, and the accommodating cavity is capable of accommodating an end portion of the valve body. Through the above arrangement, the limiting member is capable of restricting movement of the body, such that the body can maintain a relative position with respect to a valve seat, thereby improving structural stability of the electromagnetic coil during operation.

Further, the limiting member includes a retaining cover. The retaining cover has a connecting opening. The retaining cover has a first end and a second end arranged opposite to each other. The connecting opening is provided on an end surface of the first end, the connecting opening forms the accommodating cavity, and the second end of the retaining cover forms the free end. Through the above arrangement, the retaining cover is capable of restricting a relative position of the body with respect to the valve body, preventing displacement of the body and ensuring operating performance of the electromagnetic coil.

Further, the limiting member further includes a gasket. The gasket has a second mounting hole. The gasket is sleeved on the valve body through the second mounting hole, and the gasket is located between the body and the retaining cover. Through the above arrangement, the gasket is capable of improving a sealing effect between the body and the retaining cover.

Further, a plurality of first connecting posts are provided on the first end and arranged along an outer periphery of the connecting opening at annular intervals. The gasket further includes a plurality of first connecting holes, which are provided on an end surface of the gasket close to the retaining cover, and the plurality of first connecting holes are arranged in one-to-one correspondence with the plurality of first connecting posts. A plurality of second connecting posts are further provided on an end surface of the gasket away from the first connecting posts and arranged along a circumferential direction of the gasket at intervals, and the second connecting posts are inserted into the body. Through the above arrangement, a connection relationship between the limiting member and the body can be constrained, so as to prevent relative circumferential rotation between the limiting member and the body, thereby improving tightness of the limiting connection of the limiting member.

Further, a stop portion is provided on an outer wall of the retaining cover, and an outer diameter of the stop portion gradually increases in a direction from the retaining cover toward the body. Through the above arrangement, the stop portion can provide a stopping effect at a connection between the first end of the retaining cover and the gasket, or between the first end of the retaining cover and the body, so as to prevent water from entering an interior of the body through connection positions of the first connecting posts, thereby improving safety performance of the electromagnetic coil during use.

Further, a limiting structure is provided on an outer surface of the limiting member facing the covering layer, and the limiting structure is capable of being in a limiting fit with the covering layer. Through the above arrangement, the covering layer can be tightly connected to the retaining cover through the limiting structure, thereby ensuring connection performance between the covering layer and the retaining cover.

Further, the body includes an inductance coil and a magnetic conductive frame. The inductance coil is located within the magnetic conductive frame. An end of the valve body passes through the inductance coil from a side of the magnetic conductive frame and exits from an other side of the magnetic conductive frame. A side of the magnetic conductive frame adjacent to the retaining cover has a plurality of second connecting holes, and the plurality of second connecting holes are arranged in one-to-one correspondence with the plurality of second connecting posts. Through the above arrangement, the second connecting holes are capable of cooperating with the first connecting posts of the retaining cover or with the second connecting posts of the gasket, so as to restrict a relative circumferential position of the limiting member with respect to the body, prevent relative rotation between the limiting member and the body, and ensure overall structural stability of the electromagnetic coil.

According to another aspect of the present disclosure, an electromagnetic valve is provided. The electromagnetic valve includes a valve body and the electromagnetic coil as described above. The valve body is partially sleeved into the first mounting hole of the electromagnetic coil and is cooperatively connected to the limiting member of the electromagnetic coil.

Further, the valve body includes a base and a supporting portion. An end of the supporting portion is connected to the base, and an other end of the supporting portion extends through the first mounting hole. Through the above arrangement, the limiting member is capable of cooperating with the base and the supporting portion to fix the body to the valve body, such that the body can maintain a relative position with respect to the valve body, thereby ensuring structural stability of the electromagnetic coil during operation.

Further, a snap-fit structure is provided between the supporting portion and the limiting member, and the snap-fit structure is used for restricting the displacement of the limiting member relative to the supporting portion. Through the above arrangement, loosening of the limiting member during use and abnormal displacement of the body caused thereby can be prevented, thereby improving the operating stability of the electromagnetic coil.

### Brief Description of the Drawings

The accompanying drawings, which constitute a part of the present disclosure, are used for providing a further understanding of the present disclosure; and illustrative embodiments of the present disclosure and descriptions thereof are intended to explain the present disclosure and are not construed to unduly limit the present disclosure. In the drawings:
Fig. 1 is a schematic structural diagram of an electromagnetic coil and an electromagnetic valve with electromagnetic coil according to the present disclosure;
Fig. 2 is a partially enlarged view of portion A in Fig. 1;
Fig. 3 is a side view of a retaining cover according to the present disclosure;
Fig. 4 is another side view of the retaining cover according to the present disclosure;
Fig. 5 is a side view of a gasket according to the present disclosure;
Fig. 6 is another side view of the gasket according to the present disclosure;
Fig. 7 is a sectional view of the gasket according to the present disclosure;
Fig. 8 is a schematic structural diagram of a magnetic conductive frame according to the present disclosure.

The following reference signs are involved in the Figures:
10. body; 11. inductance coil; 12. magnetic conductive frame; 121. second connecting hole;
20. valve body; 21. base; 22. supporting portion; 221. first engaging groove;
30. covering layer;
40. retaining ring;
50. retaining cover; 51. second engaging groove; 52. limiting structure; 53. first connecting post; 54. stop portion;
60. gasket; 61. second mounting hole; 62. first connecting hole; 63. second connecting post.

### Detailed Description of the Embodiments

The technical solution in the embodiment of the present disclosure will be clearly and completely described below in conjunction with the accompanying drawings in the embodiment of the present disclosure. Obviously, the described embodiments are only a part of the embodiments of the present disclosure, but not all of the embodiments. The following description of at least one exemplary embodiment is merely illustrative in nature and is in no way intended to limit the disclosure and any disclosure or use thereof. Based on the embodiments of the present disclosure, all other embodiments obtained by those of ordinary skill in the art without creative work shall fall within the scope of protection of the present disclosure.

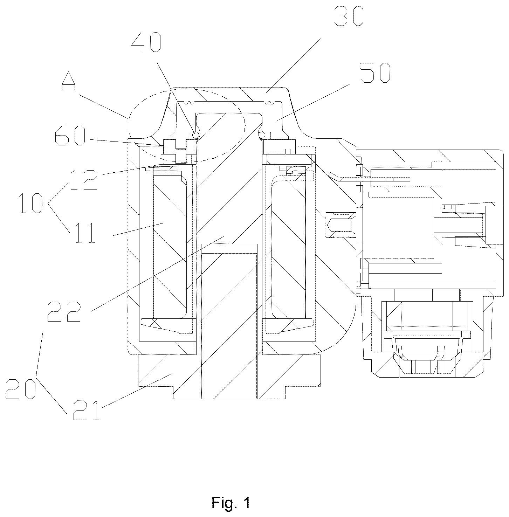

As shown in Fig. 1, an embodiment of the present disclosure provides an electromagnetic coil, which includes a body 10, a limiting member, and a covering layer 30. The body 10 has a first mounting hole extending through a central portion thereof. The limiting member is located on a side of the body 10 and arranged corresponding to the first mounting hole. The limiting member is capable of being cooperatively connected to a valve body 20 of an electromagnetic valve, so as to fix the valve body 20 within the first mounting hole. The covering layer 30 surrounds outer peripheries of the body 10 and the limiting member, so as to fix the body 10 and the limiting member.

According to a technical solution provided by the present disclosure, the body 10 is sleeved onto the valve body 20 through the first mounting hole, and a position of the body 10 is restricted by the limiting member, thereby preventing relative displacement of the body 10 with respect to the valve body 20. The covering layer 30 surrounds outer peripheries of the body 10 and the limiting member, so as to further restrict relative positions among the limiting member, the valve body 20, and the body 10, thereby preventing the limiting member from loosening during use and ensuring overall structural stability of the electromagnetic coil. Meanwhile, the covering layer 30 further provides a sealing effect for the electromagnetic coil, so as to prevent the problem of the electromagnetic coil burnout caused by water entering the body 10 , thereby improving safety performance during use.

In the present disclosure, the body 10 and the limiting member of the electromagnetic coil are encapsulated within the covering layer 30. During installation of the electromagnetic valve, the electromagnetic coil only needs to be assembled with the valve body 20. However, in a technical solution described in the background, a fixing member needs to be separately installed on a sleeve by a user. By means of the technical solution provided by the present disclosure, all components are pre-encapsulated within the covering layer 30, so that the user is not required to install components on the electromagnetic coil, thereby reducing installation steps and improving installation efficiency.

In some embodiments, the covering layer 30 may be made of a material having high plasticity, high corrosion resistance, and excellent mechanical strength, so as to improve covering performance and sealing performance of the covering layer 30. In an embodiment of the present disclosure, the covering layer 30 is made of a bulk molding compound.

In the present disclosure, the limiting member has an abutting end and a free end arranged opposite to each other. The abutting end has an accommodating cavity. The accommodating cavity is in communication with the first mounting hole. The abutting end abuts against the body 10. The free end abuts against an inner wall of the covering layer 30. The accommodating cavity is capable of accommodating an end portion of the valve body. Through the above arrangement, the abutting end of the limiting member abuts against the body 10, so as to restrict movement of the body 10 and maintain a relative position between the body 10 and the valve body 20, thereby ensuring structural stability of the electromagnetic coil during operation.

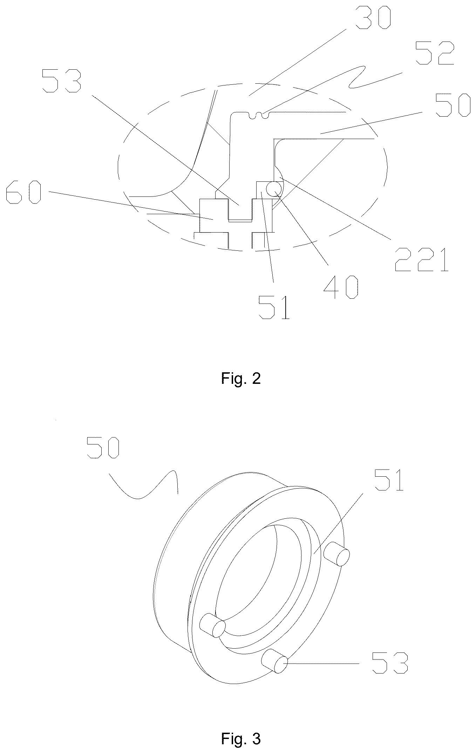

As shown in Figs. 1 and 2, the limiting member includes a retaining cover 50. The retaining cover 50 has a connecting opening. The retaining cover 50 has a first end and a second end arranged opposite to each other. The connecting opening is provided on an end surface of the first end. The connecting opening forms the accommodating cavity. The second end of the retaining cover 50 forms the free end. Through the above arrangement, an end portion of a supporting portion 22 away from a base 21 is located within the accommodating cavity of the retaining cover 50. The first end of the retaining cover 50 abuts against the body 10. In a present embodiment, the retaining cover 50 restricts a relative position of the body 10 with respect to the supporting portion 22, so as to prevent relative displacement of the body 10 and ensure operating performance of the electromagnetic coil.

As shown in Figs. 3 to 7, a plurality of first connecting posts 53 are provided on the first end and arranged along an outer periphery of the connecting opening at annular intervals. The limiting member further includes a gasket 60. The gasket 60 has a second mounting hole 61. The gasket 60 is sleeved on the valve body 20 through the second mounting hole 61. The gasket 60 is located between the body 10 and the retaining cover 50. The gasket 60 further includes a plurality of first connecting holes 62. The first connecting holes 62 are provided on an end surface of the gasket 60 close to the retaining cover 50. The plurality of first connecting holes 62 are arranged in one-to-one correspondence with the plurality of first connecting posts 53. A plurality of second connecting posts 63 are further provided on an end surface of the gasket 60 away from the first connecting posts 53 and arranged along a circumferential direction of the gasket 60 at intervals. The second connecting posts 63 are inserted into the body 10.

Through the above arrangement, the gasket 60 enables the retaining cover 50 to adapt to a valve body 20 having a longer length. When electromagnetic coils of different sizes need to be manufactured, the gasket 60 can be used to adjust a specific fitting dimension between the body 10 and the valve body 20, so as to meet use requirements of electromagnetic valves of different specifications. In a present embodiment, the retaining cover 50 and the gasket 60 jointly form the limiting member. The gasket 60 compensates for dimensional adjustment of the electromagnetic coil in actual production, so as to ensure that the limiting member abuts against the body 10 and continuously performs a limiting function for restricting movement of the body 10. The plurality of first connecting posts 53 provided on the retaining cover 50 engage with the plurality of first connecting holes 62 provided on the gasket 60, so as to restrict circumferential rotation between the retaining cover 50 and the gasket 60. The second connecting posts 63 provided on the gasket 60 cooperate with the body 10 to constrain a connection relationship between the limiting member and the body 10 and prevent circumferential rotation between the limiting member and the body 10, thereby improving tightness of a limiting connection of the limiting member. In a present embodiment, the numbers of both the first connecting posts 53 and the first connecting holes 62 are 3, which improves connection performance while reducing processing difficulty and saving production costs.

The first connecting posts 53 and the second connecting posts 63 may be arranged coaxially, or may be arranged in a staggered manner. In a present embodiment, the first connecting posts 53 are in one-to-one correspondence with the second connecting posts 63, and each first connecting post 53 is arranged coaxially with a corresponding second connecting post 63.

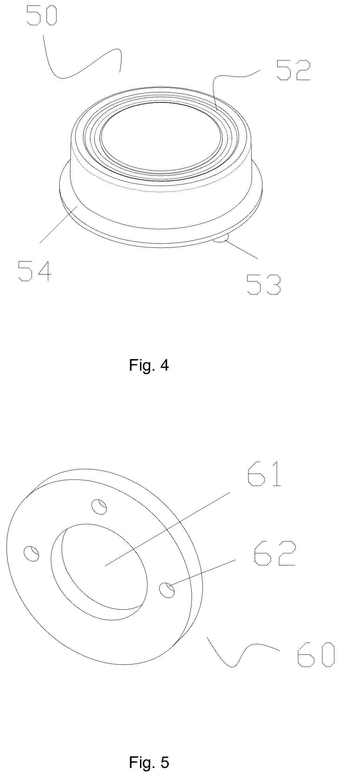

As shown in Fig. 4, in a present disclosure, a stop portion 54 is provided on an outer side wall of the retaining cover 50. An outer diameter of the stop portion 54 gradually increases in a direction from the retaining cover 50 toward the body 10. Through the above arrangement, the stop portion 54 provides a stopping effect for the gasket 60 or the body 10, so as to prevent the problem of the electromagnetic coil burnout caused by water entering the interior of the body 10 through connection positions of the first connecting posts 53, and improving the safety performance of the electromagnetic coil during use. Meanwhile, the outer diameter of the stop portion 54 gradually increasing in the direction from the retaining cover 50 toward the body 10 further improves adhesion performance of the covering layer 30, and enhances sealing performance between the retaining cover 50 and the gasket 60, and between the retaining cover 50 and the body 10.

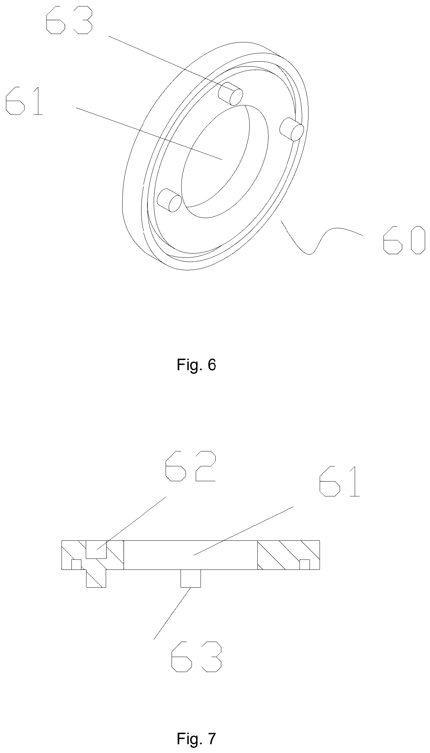

As shown in Fig. 6, in a present disclosure, an end of the gasket 60 facing the body 10 has a sealing groove. A sealing ring is arranged within the sealing groove. The sealing ring further improves sealing performance between the gasket 60 and the body 10, reduces a possibility that water enters the body 10 through the second connecting posts 63 and the second connecting holes 121, and improves the safety performance of the electromagnetic coil during use.

In a present disclosure, a limiting structure 52 is provided on an outer surface of the limiting member facing the covering layer 30. The limiting structure 52 is capable of being in a limiting fit with the covering layer 30. Through the above arrangement, the covering layer 30 is capable of being tightly connected to the retaining cover 50 through the limiting structure 52, thereby ensuring connection performance between the covering layer 30 and the retaining cover 50.

In some embodiments, the limiting structure 52 includes a limiting groove and/or a rib. Through the above arrangement, the limiting structure 52 can be machined directly on the retaining cover 50, thereby saving production costs and improving production efficiency. The limiting grooves or the ribs may be annularly arranged at an end portion of the retaining cover 50, and the annular limiting groove or the annular rib may be coaxially arranged with the retaining cover 50.

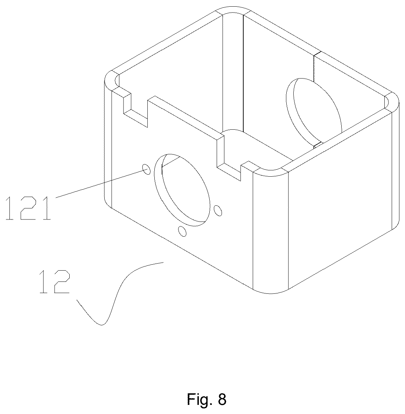

As shown in Fig. 8, in a present disclosure, the body 10 includes an inductance coil 11 and a magnetic conductive frame 12. The inductance coil 11 is located within the magnetic conductive frame 12. An end of the valve body 20 passes through the inductance coil 11 from a side of the magnetic conductive frame 12 and exits from an other side of the magnetic conductive frame 12. A side of the magnetic conductive frame 12 adjacent to the retaining cover 50 has a plurality of second connecting holes 121. The plurality of second connecting holes 121 are arranged in one-to-one correspondence with the plurality of second connecting posts 63. Through the above arrangement, the magnetic conductive frame 12 organizes a magnetic field generated during operation of the inductance coil 11, so as to improve utilization efficiency of the magnetic field. In addition, the plurality of second connecting holes 121 are provided on the side of the magnetic conductive frame 12 adjacent to the retaining cover 50, and cooperate with the first connecting posts 53 of the retaining cover 50 or with the second connecting posts 63 of the gasket, so as to restrict a circumferential relative position of the limiting member with respect to the body 10, prevent relative rotation between the limiting member and the body 10, improve connection performance between the limiting member and the body 10, and ensure overall structural stability of the electromagnetic coil. In a present embodiment, the second connecting holes 121 are fitted with the second connecting posts 63, and the first connecting posts 53 are fitted with the first connecting holes 62.

The present disclosure further provides an electromagnetic valve. The electromagnetic valve includes a valve body and the electromagnetic coil described above. The valve body 20 is partially sleeved into the first mounting hole of the electromagnetic coil and is cooperatively connected to the limiting member of the electromagnetic coil.

In some embodiments, the valve body 20 includes a base 21 and a supporting portion 22. An end of the supporting portion 22 is connected to the base 21. An other end of the supporting portion 22 extends through the first mounting hole. Through the above arrangement, the limiting member cooperates with the base 21 and the supporting portion 22 to fix the body 10 on the valve body 20, so that the body 10 maintains a relative position with respect to the valve body 20, thereby ensuring structural stability of the electromagnetic coil during operation.

Further, a snap-fit structure is provided between the limiting member and the supporting portion 22. The snap-fit structure is used for restricting the displacement of the limiting member relative to the supporting portion 22. Through the snap-fit structure, loosening of the limiting member caused by movement of the valve body during operation of the electromagnetic valve can be prevented. The limiting effect of the limiting member is ensured. In a present disclosure, the limiting member cooperates with the snap-fit structure to form a reliable fixing structure, so as to prevent loosening of the limiting member during use, thereby avoiding relative displacement of the body 10 and improving operational stability of the electromagnetic coil.

As shown in Fig. 2, in a present disclosure, a first engaging groove 221 is provided on an outer side wall of an end of the supporting portion 22 adjacent to the accommodating cavity. A second engaging groove 51 is provided on an inner side wall of the accommodating cavity. The second engaging groove 51 is located between the retaining cover 50 and the gasket 60. The first engaging groove 221 and the second engaging groove 51 are arranged correspondingly to form a mounting groove. A retaining ring 40 is arranged within the mounting groove. The retaining ring 40 engages with the mounting groove to form the snap-fit structure. Through the above arrangement, the retaining ring 40 cooperates with the mounting groove to restrict a relative position between the limiting member and the supporting portion 22, so as to ensure a limiting effect of the limiting member on the body 10 and further ensure structural stability of the electromagnetic coil.

It should be noted that the terminology used herein is for the purpose of describing particular embodiments only and is not intended to limit the exemplary embodiments of the present disclosure. As used herein, unless the context clearly dictates otherwise, the singular forms are intended to include the plural forms as well. It should also be understood that when the terms "comprise" and/or "include" are used in this specification, they specify the presence of stated features, steps, operations, devices, components, and/or combinations thereof.

Unless otherwise specifically stated, the relative arrangements of components and steps, numerical expressions, and numerical values set forth in these embodiments do not limit the scope of the present disclosure. Meanwhile, it should be understood that the dimensions of the various parts shown in the accompanying drawings are not drawn according to the actual proportional relationship for the convenience of description. Techniques, methods, and apparatus known to those of ordinary skill in the relevant art may not be discussed in detail, but where appropriate, the techniques, methods and equipment shall be considered as part of the authorized description. In all examples illustrated and discussed herein, any specific values shall be construed as merely illustrative rather than restrictive. Accordingly, other examples of the exemplary embodiments may have different values. It should be noted that like items are denoted by like numerals and letters in the following drawings. Therefore, once a specific item is defined in one of the drawings, the item does not need to be further discussed in subsequent drawings.

In the description of the embodiments of the present disclosure, it should be understood that orientation or position relationships indicated by terms such as "front", "rear", "up", "down", "left", "right", "transverse", "vertical", "perpendicular", "horizontal", "top", and "bottom" are based on orientation or position relationships shown in the accompanying drawings and are merely for ease of description of the present disclosure and simplification of the description, rather than indicating or implying that the apparatuses or elements referred to must have a specific orientation or be constructed and operated in a specific orientation, and therefore cannot be construed as limiting the embodiments of the present disclosure. Directional terms "inner" and "outer" refer to positions relative to the contour of each component itself.

For ease of description, spatially relative terms such as "above...", "over...", "on an upper surface of...", and "on" may be used herein to describe the spatial positional relationship between one device or feature and another device or feature as illustrated in the drawings. It should be understood that spatially relative terms are intended to encompass different orientations of the device in use or operation in addition to the orientation depicted in the drawings. For example, if a device in the drawing is turned upside down, devices described as "above" or "over" other devices or structures would then be oriented "below" or "beneath" the other devices or structures. Thus, the exemplary term "above" may include both the orientations of "above" and "below". The device may also be positioned in other different manners (rotated by 90 degrees or at other orientations), and the spatially relative descriptions used herein shall be interpreted accordingly.

In addition, it should be noted that the use of terms such as "first" and "second" to define components is merely for the convenience of distinguishing the corresponding components; unless otherwise stated, the aforementioned terms have no special meanings and shall not be construed as limiting the scope of protection of the present disclosure.

The foregoing is merely a preferred embodiment of the present disclosure and is not intended to limit the present disclosure, which may be subject to various modifications and variations to those skilled in the art. Any modification, equivalent replacement, improvement, etc., made within the spirit and principles of the present disclosure should fall within the scope of protection of the present disclosure.

## Claims

1. An electromagnetic coil, comprising:
a body (10), a central portion of the body (10) being provided with a first mounting hole extending therethrough;
a limiting member located on a side of the body (10) and arranged corresponding to the first mounting hole, wherein the limiting member is capable of being cooperatively connected to a valve body (20) of an electromagnetic valve to fix the valve body (20) within the first mounting hole; and
a covering layer (30) surrounding outer peripheries of the body (10) and the limiting member, so as to fix the body (10) and the limiting member.

2. The electromagnetic coil according to claim 1, wherein the limiting member has an abutting end and a free end arranged opposite to each other, the abutting end has an accommodating cavity, the accommodating cavity is in communication with the first mounting hole, the abutting end abuts against the body (10), the free end abuts against an inner wall of the covering layer (30), and the accommodating cavity is capable of accommodating an end portion of the valve body.

3. The electromagnetic coil according to claim 2, wherein the limiting member comprises a retaining cover (50), the retaining cover (50) has a connecting opening, the retaining cover (50) has a first end and a second end arranged opposite to each other, the connecting opening is provided on an end surface of the first end, the connecting opening forms the accommodating cavity, and the second end of the retaining cover (50) forms the free end.

4. The electromagnetic coil according to claim 3, wherein the limiting member further comprises a gasket (60), the gasket (60) has a second mounting hole (61), the gasket (60) is sleeved on the valve body (20) through the second mounting hole (61), and the gasket (60) is located between the body (10) and the retaining cover (50).

5. The electromagnetic coil according to claim 4, wherein a plurality of first connecting posts (53) are provided on the first end and arranged along an outer periphery of the connecting opening at annular intervals; the gasket (60) further comprises a plurality of first connecting holes (62), the first connecting holes (62) are provided on an end surface of the gasket (60) close to the retaining cover (50); the plurality of first connecting holes (62) are provided in one-to-one correspondence with the plurality of first connecting posts (53); a plurality of second connecting posts (63) are further provided on an end surface of the gasket (60) away from the first connecting posts (53) and arranged along a circumferential direction of the gasket (60) at intervals, and the second connecting posts (63) are inserted into the body (10).

6. The electromagnetic coil according to claim 3, wherein a stop portion (54) is provided on an outer side wall of the retaining cover (50), and an outer diameter of the stop portion (54) gradually increases in a direction from the retaining cover (50) toward the body (10).

7. The electromagnetic coil according to claim 1, wherein a limiting structure (52) is provided on an outer surface of the limiting member facing the covering layer (30) and is in a limiting fit with the covering layer (30).

8. The electromagnetic coil according to claim 5, wherein the body (10) comprises an inductance coil (11) and a magnetic conductive frame (12), the inductance coil (11) is located within the magnetic conductive frame (12), an end of the valve body (20) passes through the inductance coil (11) from a side of the magnetic conductive frame (12) and exits from an other side of the magnetic conductive frame (12), a side of the magnetic conductive frame (12) adjacent to the retaining cover (50) has a plurality of second connecting holes (121), and the plurality of second connecting holes (121) are arranged in one-to-one correspondence with the plurality of second connecting posts (63).

9. An electromagnetic valve, comprising a valve body and the electromagnetic coil according to any one of claims 1 to 8, wherein the valve body (20) is partially sleeved into the first mounting hole of the electromagnetic coil and is cooperatively connected to the limiting member of the electromagnetic coil.

10. The electromagnetic valve according to claim 9, wherein the valve body (20) comprises a base (21) and a supporting portion (22), an end of the supporting portion (22) is connected to the base (21), and an other end of the supporting portion (22) extends through the first mounting hole.

11. The electromagnetic valve according to claim 10, wherein a snap-fit structure is provided between the supporting portion (22) and the limiting member, and the snap-fit structure is used for restricting displacement of the limiting member relative to the supporting portion (22).
